# EUROPEAN PATENT APPLICATION

(11) **EP 1 466 547 A1**
(43) Date of publication of application: **13.10.2004**
(21) Application number: 03012723.7
(22) Date of filing: 04.06.2003
(51) Int. Cl.: A47J 42/16, A47J 42/18

(54) **Apparatus for grinding coffee beans**

(30) Priority: 11.04.2003 KR 2003023093
(71) Applicant: SAMSUNG GWANG JU ELECTRONICS CO., LTD., Kwangju-City (KR)
(72) Inventor: Park, Hae, Chan, Kwangsan-Gu., Kwangju-City (KR)
(74) Representative: Wunderlich, Rainer, Dipl.-Ing.

(57) **Abstract**

An apparatus for grinding coffee beans, enabling a size of coffee bean grinds to be easily controlled, is disclosed. The apparatus includes a rotating cutter (16) having grinding blades at its upper surface, and rotated by a motor (11), a fixed cutter (18) positioned above the rotating cutter (16) with a spacing therebetween, and having grinding blades at its lower surface and a central charging inlet (19) formed therethrough, a worm wheel (31) connected to the fixed cutter (18) to raise and lower the fixed cutter (18), a worm gear (32) engaged with teeth of worm wheel (31) to rotate the worm wheel (31), and a control motor (34) to rotate the worm gear (32) in normal and reverse directions.

## Description

### CROSS-REFERENCE TO RELATED APPLICATION

This application claims the benefit of Korean Application No. 2003-23093, filed April 11, 2003, in the Korean Intellectual Property Office, the disclosure of which is incorporated herein by reference.

### BACKGROUND OF THE INVENTION

### Field of the Invention

The present invention relates to an apparatus for grinding coffee beans, and more particularly to an apparatus for grinding coffee beans, which enables coffee beans to be easily ground to a desired size.

### Description of the Related Art

Generally, roasted coffee beans are ground to appropriate sized grinds in order to extract coffee beverage. In this case, the finer the grinds of the coffee beans, the more rapid the rate of flavor and fragrance extraction due to increase of the surface area exposed to water during brewing, but the more bitter the flavor of the coffee. On the other hand, where grinds of the ground coffee beans are coarse, the rate of the flavor extraction is lowered and it is difficult to achieve sufficient flavor and fragrance extraction. Accordingly, it is preferable that roasted coffee beans are ground to grinds of a desired size in order to extract coffee beverage having delicious flavor and fragrance.

A typical apparatus for grinding coffee beans includes an upper fixed cutter having grinding blades at its lower surface, and a lower rotating cutter provided below the upper fixed cutter with a predetermined spacing therebetween and having grinding blades at its upper surface. The lower rotating cutter is rotated by a motor. Roasted coffee beans are supplied to a space between the upper and lower cutters through a hole formed at the center of the upper fixed cutter. The grinding blades of the upper fixed cutter and the grinding blades of the lower rotating cutter are positioned to face each other and are inclined to approach each other radially. By this configuration, coffee beans, which are introduced into the space between the upper and lower cutters, are ground by the grinding blades of the upper and lower cutters while being moved radially outward by centrifugal force during rotation of the lower rotating cutter.

In the apparatus, the upper fixed cutter is adapted to be moved up and down within a certain range by a user's manual manipulation, so that a spacing between the upper and lower cutters is controlled, thereby controlling a size of ground coffee bean grinds.

However, since a user must raise or lower the upper fixed cutter by his/her manual manipulation, in order to control a size of ground coffee bean grinds by controlling a spacing between the upper fixed cutter and the lower rotating cutter, an operation of controlling a size of coffee bean grinds is considerably cumbersome.

### SUMMARY OF THE INVENTION

Accordingly, it is an aspect of the present invention to provide an apparatus for grinding coffee beans, which is constructed to achieve easy control of a spacing between an upper fixed cutter and a lower rotating cutter to facilitate control of a size of coffee bean grinds.

Additional aspects and advantages of the invention will be set forth in part in the description which follows and, in part, will be obvious from the description, or may be learned by practice of the invention.

The foregoing and other aspects of the present invention are achieved by providing an apparatus for grinding coffee beans, which includes a rotating cutter having grinding blades at its upper surface, and rotated by a motor, a fixed cutter positioned above the rotating cutter with a spacing therebetween, and having grinding blades at its lower surface and a central charging inlet formed therethrough, a worm wheel connected to the fixed cutter to raise and lower the fixed cutter, a worm gear engaged with circumferential teeth of the worm wheel to rotate the worm wheel, and a control motor to rotate the worm gear in normal and reverse directions.

The apparatus may further include a housing receiving the rotating and fixed cutters, and a support member fixed to the fixed cutter and threadedly engaged with the worm wheel to be raised and lowered without rotational displacement.

The worm wheel may include a hollow shaft communicating with the charging inlet of the fixed cutter to allow coffee beans to be introduced into a space between the rotating and fixed cutters therethrough, and the support member may include a cylindrical connection part threadedly engaged with the worm wheel.

The housing may include a discharging outlet to allow coffee beans ground between the rotating and fixed cutters to be discharged to the outside therethrough, and the discharging outlet may be provided with a guide conduit.

The guide conduit may be provided with a distributor to distribute a preset amount of coffee bean grinds.

The apparatus may further include a control switch to control a rotational direction of the control motor.

The hollow shaft of the worm wheel may be communicated with a coffee bean container.

The housing may be provided at an inner surface thereof with a guide groove, and the support member may be provided at an outer surface with a guide protrusion, in order to guide an up-and-down movement of the support member.

### BRIEF DESCRIPTION OF THE DRAWINGS

These and other aspects and advantages of the invention will become apparent and more readily appreciated from the following description of the preferred embodiments, taken in conjunction with the accompanying drawings of which:
FIG. 1 is a cross-sectional view of an apparatus for grinding coffee beans, according to the present invention;
FIG. 2 is a cross-sectional view taken along line II-II of FIG. 1; and
FIG. 3 is a cross-sectional view taken along line III-III of FIG. 1.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

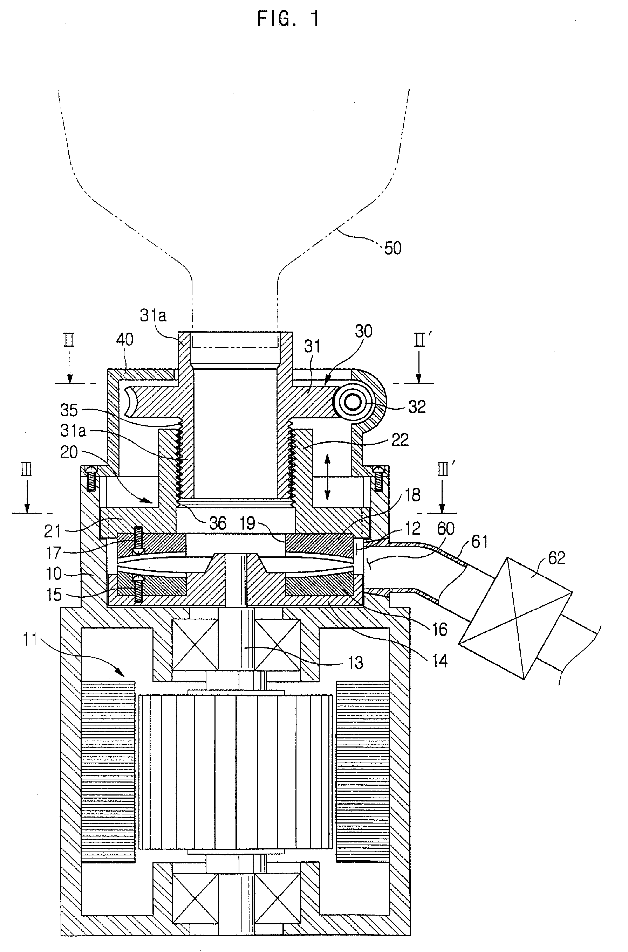

As shown in FIG. 1, the apparatus according to the present invention includes a housing 10, which is provided at its lower portion with a motor 11 and is provided at its upper portion with a grinding chamber 12. The grinding chamber 12 of the housing 10 is shaped into a cylindrical form with an upper end opening.

The grinding chamber 12 is provided at a bottom surface thereof with a rotating plate 14, which is coupled to a shaft 13 of the motor 11. A disk-shaped rotating cutter 16 is fixed to an upper surface of the rotating plate 14 by screws 15 to be rotated therewith, and is provided at an upper surface thereof with grinding blades. The grinding chamber 12 is also provided at an upper portion thereof with a support member 20, which is movable up and down within a certain range but is prevented from being rotated. A disk-shaped fixed cutter 18 is fixed to a lower surface of the support member 20 by screws 17 to be moved up and down therewith, and is provided at a lower surface thereof with grinding blades to face the grinding blades of the lower rotating cutter 16. The upper fixed cutter 18 is formed with a central charging inlet 19, which is positioned at the center of the upper fixed cutter 18 to allow coffee beans to be introduced into a space between the upper and lower cutter therethrough.

The grinding blades of the lower rotating cutter 16 are configured to be gradually raised toward radial outer ends thereof, while the grinding blades of the upper rotating cutter 18 are configured to be gradually lowered toward radial outer ends thereof. More specifically, the grinding blades of the lower rotating cutter 16 and the upper fixed cutter 18 are configured such that a spacing between the grinding blades of the lower rotating cutter 16 and the grinding blades of the upper fixed cutter 18 is larger at the center than at the outer circumference of the cutters 16 and 18. By this configuration, when the lower rotating cutter 16 is rotated by the motor 11, coffee beans, which are introduced into the space between the lower and upper cutters 16 and 18 through the charging inlet 19 of the upper fixed cutter 18, are ground between the blades of the lower and upper cutters 16 and 18 while being moved radially outward by centrifugal force.

The support member 18 serves to support the upper fixed cutter 18, and includes a flange part 21, at a lower surface of which the upper fixed cutter 18 is coupled, and a cylindrical connection part 22 upwardly extended from the center of the flange part 21 by a predetermined length.

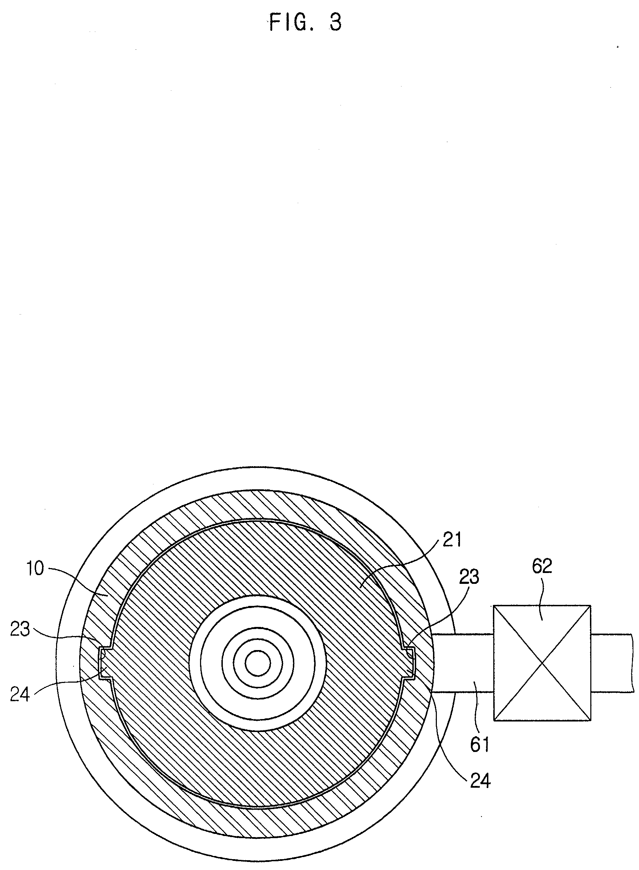

As shown in FIG. 3, the housing 10 is formed at opposite sides of an inner surface thereof with a pair of vertical guide grooves 23 each having a certain width, and the flange part 21 is formed at opposite sides of an outer surface thereof with a pair of vertical guide protrusions 24 to be fitted in the guide grooves 23, so as to permit the support member 20 to be raised and lowered while preventing the support member 20 from being rotated.

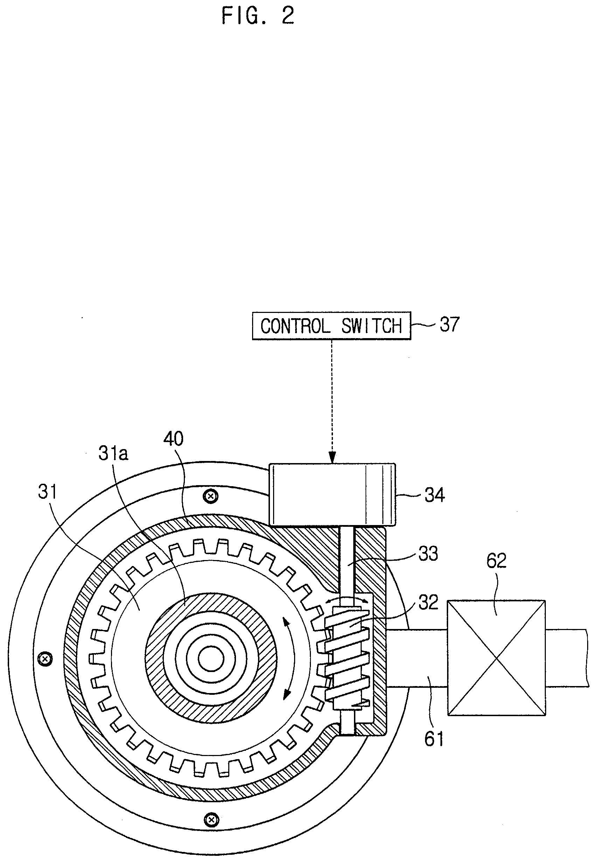

As shown in FIGS. 1 and 2, a motorized lifting unit 30 is provided at an upper portion of the support member 20 in order to raise and lower the support member 20 within a certain range. By the raising and lowering movement of the support member 20, a spacing between the lower rotating cutter 16 and the upper fixed cutter 18 is varied, thereby controlling a size of coffee bean grinds. The lifting unit 30 includes a worm wheel 31, which has a hollow shaft 31a connected to the support member 20 by a threaded engagement therebetween, a worm gear 32 engaged with teeth of the worm wheel 31 to rotate the worm wheel 31, and a control motor 34 to rotate the worm gear 32 in normal and reverse directions. An upper case 40 is provided at an upper end of the housing 10 to protectively surround the worm wheel 31 and the worm gear 32 of the lifting unit 30.

The hollow shaft 31 a of the worm wheel 31 is upwardly extended from the upper case 40 by a certain length at its upper portion, and is downwardly extended into the connection part 22 of the support member 20 by a certain length at its lower portion. The downward extension of the hollow shaft 31 a is provided at an outer surface thereof with a male threaded portion 35, and the connection part 22 is provided at an inner surface thereof with a female threaded portion 36 to be threadedly engaged with the male threaded portion 35, thereby enabling the hollow shaft 31 a to be coupled to the connection part 22. Thanks to the configuration, coffee beans, which are introduced into the hollow shaft 31 a of the worm wheel 31, are guided to the central charging inlet 19 of upper fixed cutter 18. Therefore, when the worm wheel 31 is rotated in normal and reverse directions, the support member 20, which is connected to the hollow shaft 31 a by threaded engagement therebetween, is raised and lowered within a certain range, thereby controlling a spacing between the lower rotating cutter 16 and the upper fixed cutter 18. To this end, the worm wheel 31 is supported in the upper case 40 to be rotated without vertical displacement.

As shown in FIG. 2, the worm gear 32 is joined to a rotating shaft 33, which is supported in the upper case 40 to be close to the teeth of the worm wheel 31. The rotating shaft 33 is coupled to a drive shaft of the control motor 34 mounted on an outer surface of the upper case 40. Accordingly, as the control motor 34 is rotated, the worm gear 32 is rotated, and thus the worm wheel 31 is rotated. The control motor 34 is rotated in the reverse direction by a manipulation of a control switch 37 connected to the control motor 34.

As shown in FIG. 1, the hollow shaft 31 a of the worm wheel 31 is provided at an upper end thereof with a coffee container 50 connected thereto, so as to feed roasted coffee beans to the hollow shaft 31 a. The housing 10 is provided with a discharging outlet 60 communicating with the grinding chamber 12 to allow coffee beans grinds to be discharged therethrough. The discharging outlet 60 is connected to a guide conduit 61 to guide the coffee bean grinds to a desired position.

Where the apparatus for grinding coffee beans, according to the present invention, is installed in a usual coffee machine, the guide conduit 61 may be provided with a distributor 62 adapted to deliver a fixed quantity of coffee bean grinds. The distributor 62 is intended to deliver a preset amount of coffee bean grinds to a coffee-extraction unit (not shown) in the coffee machine. In this case, operations of the motor 11 to rotate the lower rotating cutter 16, and the distributor 62 are controlled by a control unit of the coffee machine.

An operation of the apparatus for grinding coffee beans, according to the present invention, will now be described in detail.

When a user puts roasted coffee beans into the coffee container 50, the coffee beans are supplied to a space between the lower rotating cutter 16 and the upper fixed cutter 18 through the hollow of the hollow shaft 31 a and the charging inlet 19 of the upper fixed cutter 18. Thereafter, as the motor 11 is operated, the lower rotating cutter 16 is rotated at high speed. Consequently, the coffee beans in the space are ground by the lower and upper cutters 16 and 18 while being moved radially outward by centrifugal force. The coffee bean grinds are discharged to the outside through the discharging outlet 60.

At this point, where the coffee bean grinds are relatively larger or smaller than a preset size, the upper fixed cutter 18 is lowered or raised by manipulation of the control switch 37. Consequently, a spacing between the lower rotating cutter 16 and the upper fixed cutter 18 is controlled, and thus a size of coffee bean grinds is controlled according to the spacing. In this control procedure, the control motor 34 is rotated in normal or reverse direction by the manipulation of the control switch 37, and thus the worm gear 32 coupled to the rotating shaft of the motor 34 is rotated. By the rotation of the worm gear 32, the worm wheel 31 is also rotated. As the worm wheel 31 is rotated in normal or reverse directions, the support member 20, which is threadedly engaged with the hollow shaft 31 a of the worm wheel 31 at its inner surface, is raised or lowered within a certain range, thereby controlling a spacing between the lower and upper cutters 16 and 18 and thus a size of coffee bean grinds.

As apparent from the above description, the present invention provides an apparatus for grinding coffee beans, in which an upper fixed cutter is adapted to be raised and lowered within a certain range by a motorized lifting unit, so as to control a spacing between the upper fixed cutter and a lower rotating cutter. Accordingly, the apparatus according to the present invention enables a size of coffee beans ground between the upper and lower cutters to be easily controlled.

Although a preferred embodiment of the present invention has been shown and described, it would be appreciated by those skilled in the art that changes may be made in these embodiments without departing from the principles and spirit of the invention, the scope of which is defined in the claims and their equivalents.

## Claims

1. An apparatus to grind coffee beans, comprising:
a rotating cutter having grinding blades at its upper surface, and rotated by a motor;
a fixed cutter positioned above the rotating cutter with a spacing therebetween, and having grinding blades at its lower surface and a central charging inlet formed therethrough;
a worm wheel connected to the fixed cutter to raise and lower the fixed cutter;
a worm gear engaged with circumferential teeth of the worm wheel to rotate the worm wheel; and
a control motor to rotate the worm gear in normal and reverse directions.

2. The apparatus as set forth in claim 1, further comprising:
a housing receiving the rotating and fixed cutters; and
a support member fixed to the fixed cutter and threadedly engaged with the worm wheel to be raised and lowered without rotational displacement.

3. The apparatus as set forth in claim 2, wherein the worm wheel includes a hollow shaft communicating with the charging inlet of the fixed cutter to allow coffee beans to be introduced into a space between the rotating and fixed cutters therethrough, and the support member includes a cylindrical connection part threadedly engaged with the worm wheel.

4. The apparatus as set forth in claim 2, wherein the housing includes a discharging outlet to allow coffee beans ground between the rotating and fixed cutters to be discharged to the outside therethrough, and the discharging outlet is provided with a guide conduit.

5. The apparatus as set forth in claim 4, wherein the guide conduit is provided with a distributor to distribute a preset amount of coffee bean grinds.

6. The apparatus as set forth in claim 1, further comprising a control switch to control a rotational direction of the control motor.

7. The apparatus as set forth in claim 3, wherein the hollow shaft of the worm wheel is communicated with a coffee bean container.

8. The apparatus as set forth in claim 2, wherein the housing is provided at an inner surface thereof with a guide groove, and the support member is provided at an outer surface with a guide protrusion, in order to guide an up-and-down movement of the support member.

9. An apparatus to grind coffee beans, comprising:
a rotating cutter to be rotated by a motor;
a fixed cutter positioned above the rotating cutter with a spacing therebetween, and having a central charging inlet therethrough; and
a motorized lifting unit adapted to raise and lower the fixed cutter to control a spacing between the rotating and fixed cutters.
